# EUROPEAN PATENT SPECIFICATION

(11) **EP 2 883 745 B1**
(45) Date of publication and mention of the grant of the patent: **29.03.2017**
(21) Application number: 14195575.7
(22) Date of filing: 01.12.2014
(51) Int. Cl.: B60N 2/28

(54) **SUPPORTING FOOT DEVICE AND CHILD SAFETY SEAT THEREWITH**
STÜTZFUSSVORRICHTUNG UND DAMIT AUSGESTATTETER KINDERSICHERHEITSSITZ
DISPOSITIF DE PIED SUPPORT ET SIÈGE DE SÉCURITÉ ENFANT DOTÉ DE CELUI-CI

(30) Priority: 13.12.2013 CN 201310680432
(43) Date of publication of application: 17.06.2015
(73) Proprietor: Wonderland Nurserygoods Company Limited, Hong Kong 999077 (HK)
(72) Inventor: Zhao, Guang-Hui, 523648 Dongguan, Guangdong (CN)
(74) Representative: Hoefer & Partner Patentanwälte mbB

(56) References cited:
- EP-A2- 0 554 807
- JP-A- 2008 290 580
- US-A1- 2004 245 822

## Description

### Field of the Invention

The present invention relates to a child safety seat according to the preamble of claim 1.

### Background of the Invention

In order to keep children safe in cars, child safety seats are usually installed on car seats used for children. Child safety seats are assembled with car seats and fasten children on child safety seats by safety belts so as to ensure children's safety.

However, it is required to use child safety seats with various specifications for children according to their different growth stages. For infants, since their bones are tender, sitting posture will harm their backbones. In addition, their necks are likely to be injured when an emergency brake occurs. Therefore, child safety seats in backward use are requested. Meantime, child safety seats are inclined backward, such that infants can comfortably lie down in child safety seats. For older children, since their bones are stronger, child safety seats in forward use can be suitable for them.

As a result, people are looking for a child safety seat suitable for children in different growth stages and ensuring safety of child safety seats in the meantime. In other words, there is a need to design a child safety seat capable of adjusting an inclined angle according to different growth stages of children or different situation. Although such child safety seats have been introduced to market, adjustment mechanisms of the conventional child safety seats are complicated and not easy to be operated. Therefore, it has become an urgent topic to design a child safety seat with simple structure and easy operation which is suitable for children in different growth stages.

EP 0 554 807 A2 discloses a child safety seat according to the preamble of claim 1.

### Summary of the Invention

This is mind, the present invention aims at providing a child safety seat with simple structure and easy operation, which is suitable for children in different growth stages.

This is achieved by a child safety seat according to claim 1. The dependent claims pertain to corresponding further developments and improvements.

As will be seen more clearly from the detail description following below, the supporting foot device of the claimed child safety seat is disposed at a bottom of a body of the child safety seat and for abutting against a car seat, so as to adjust an inclined angle of the body. The supporting foot device includes a forward foot, a backward foot and a connecting member. The forward foot is pivoted to the bottom of the body at a first pivoting point. The backward foot is pivoted to the bottom of the body at a second pivoting point. The connecting member is pivoted to the forward foot and backward foot. The forward foot is pivoted to the connecting member at a third pivoting point. The backward foot is pivoted to the connecting member at a fourth pivoting point, and the forward foot and the back forward foot are linked to rotate by the connecting member.

Preferably, the body, the forward foot, the backward foot, and the connecting member form a four-bar linkage structure with the first pivoting point, the second pivoting point, the third pivoting point, and the fourth pivoting point.

According to the invention, a rotating direction of the forward foot is opposite to a rotating direction of the backward foot.

Preferably, a line connected between the first pivoting point and the second pivoting point intersects a line connected between the third pivoting point and the fourth pivoting point.

Preferably, a first restraining mechanism and a second restraining mechanism are disposed at the bottom of the body of the child safety seat, and the first restraining mechanism or the second restraining mechanism restrains rotation of the supporting foot device.

Specifically, the first restraining mechanism includes a first positioning protrusion protruded from the forward foot, and a first positioning slot formed on the bottom of the body and disposed at a location corresponding to the first positioning protrusion. The second restraining mechanism includes a second positioning protrusion protruded from the backward foot, and a second positioning slot formed on the bottom of the body and disposed at a location corresponding to the second positioning protrusion.

Specifically, a first supporting surface is formed on an end of the forward foot away from the body, and the first supporting surface is substantially parallel to a seat surface of the child safety seat such that the child safety seat is in an erection status when the supporting foot device is rotated to a position where the second restraining mechanism restrains the supporting foot device from being rotated.

Specifically, a second supporting surface is formed on an end of the backward foot away from the body, and the second supporting surface is inclined relative to the seat surface of the child safety seat such that the child safety seat is in an backward status when the supporting foot device is rotated to a position where the first restraining mechanism restrains the supporting foot device from being rotated.

Specifically, the backward foot is located at an upper side of the forward foot.

Preferably, the body includes a seat portion and a backrest portion. The seat portion includes a seat supporting surface, and the backrest portion includes a backrest supporting surface. The forward foot and the seat supporting surface cooperatively support the body when the forward foot is in use, and the backward foot and the backrest supporting surface cooperatively support the body when the backward foot is in use.

In summary, the present invention provides a child safety seat with a supporting foot device, with simple structure and easy operation, which is suitable for children in different growth stages. The forward foot and the backward foot is linked to rotate by the first pivoting point at the bottom of the body to pivot to the forward foot, the second pivoting point at the bottom of the body to pivot to the backward foot, and the connecting member to connect the forward foot to the backward foot. In addition, the body, the forward foot, the backward foot, and the connecting member form the four-bar linkage structure with four pivoting points including the first pivoting point, the second pivoting point, the third pivoting point, and the fourth pivoting point, such that the rotating direction of the forward foot is opposite to the rotating direction of the backward foot. When one of the forward foot and the backward foot is rotated, the other one of the forward foot and the backward foot is driven by the connecting member to be rotated relative to the body, such that it is convenient to lead the forward foot or the backward foot to abut the car seat by the supporting foot device. Furthermore, by adjusting different feet of the supporting foot device abutting the car seat, the body can be positioned at different inclined angles, such that it is convenient to adjust the inclined angle of the child safety seat according to different situations.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a schematic diagram of a child safety seat according to an embodiment of the present invention,
FIG. 2 is an enlarged diagram of a portion A of the child safety seat shown in FIG. 1 according to the embodiment of the present invention,
FIG. 3 is a schematic diagram of a supporting foot device according to the embodiment of the present invention,
FIG. 4 is a diagram showing the child safety seat in forward use according to the embodiment of the present invention,
FIG. 5 is a diagram of the supporting foot device as the child safety seat is in forward use according to the embodiment of the present invention,
FIG. 6 is a diagram showing the child safety seat in backward use according to the embodiment of the present invention, and
FIG. 7 is a diagram of the supporting foot device as the child safety seat is in backward use according to the embodiment of the present invention.

### Detailed Description

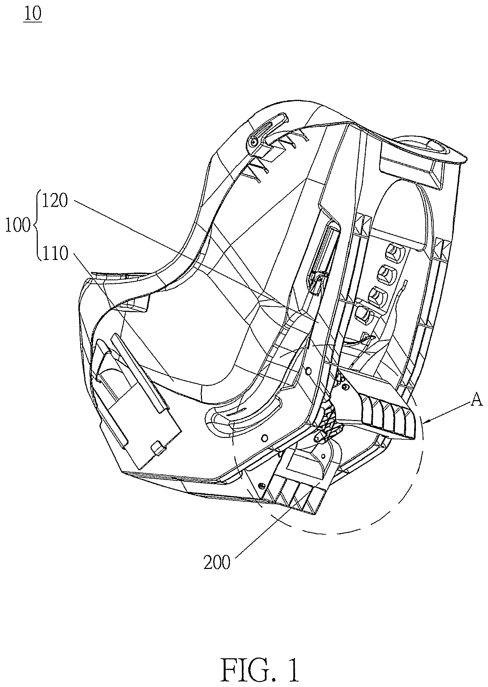

Please refer to FIG. 1. FIG. 1 is a schematic diagram of a child safety seat 10 according to an embodiment of the present invention. The child safety seat 10 includes a body 100 and a supporting foot device 200 disposed at a bottom of the body 100. The body 100 includes a seat portion 110 and a backrest portion 120. The seat portion 110 includes a seat supporting surface, not shown in the figure, for supporting a child's hips and legs. The backrest portion 120 is used for supporting the child's back and head. The supporting foot device 200 is disposed at the bottom of the body 100 of the child safety seat 10. More specifically, the supporting foot device 200 is pivoted to a back side of the backrest portion 120.

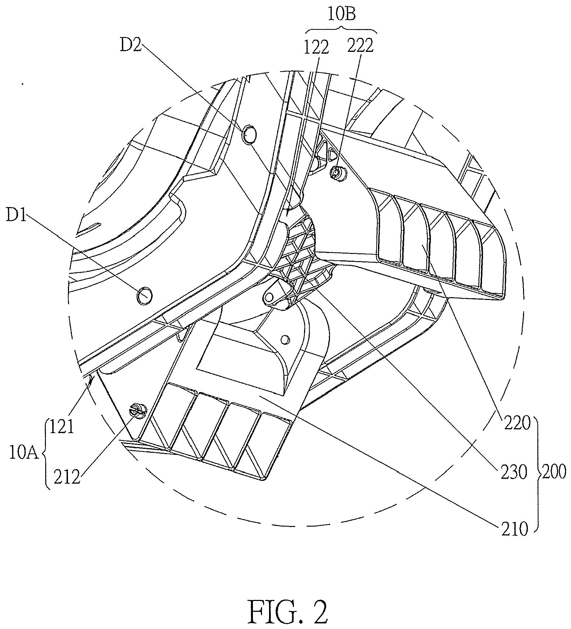

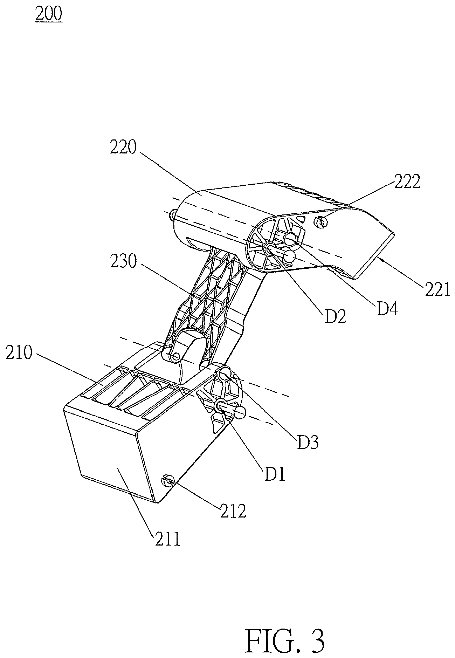

Please see FIG. 2 and FIG. 3. FIG. 2 is an enlarged diagram of a portion A of the child safety seat 10 shown in FIG. 1 according to the embodiment of the present invention. FIG. 3 is a schematic diagram of the supporting foot device 200 according to the embodiment of the present invention. The supporting foot device 200 includes a forward foot 210, a backward foot 220 and a connecting member 230. The forward foot 210 is pivoted to the bottom of the body 100 at a first pivoting point D1. The first pivoting point D1 is located at a side of the backrest portion 120 near the seat portion 110, i.e., the forward foot 210 is located below the backward foot 220. The backward foot 220 is pivoted to the bottom of the body 100 at a second pivoting point D2. The second pivoting point D2 is located at a side of the backrest portion 120 away from the seat portion 110, i.e., the backward foot 220 is located above the forward foot 210. Two ends of the connecting member 230 are pivoted to the forward foot 210 and backward foot 220 respectively. The forward foot 210 is pivoted to the connecting member 230 at a third pivoting point D3. The backward foot 220 is pivoted to the connecting member 230 at a fourth pivoting point D4. The third pivoting point D3 is located at an inner side of the first pivoting point D1 at the forward supporting foot 210 relative to the body 100. The fourth pivoting point D4 is located at an outer side of the second pivoting point D2 at the backward foot 220 relative to the body 100. The body 100, the forward foot 210, the backward foot 220, and the connecting member 230 can form a four-bar linkage structure with the first pivoting point D1, the second pivoting point D2, the third pivoting point D3, and the fourth pivoting point D4, such that the forward foot 210 and the back forward foot 220 are linked to rotate and a rotating direction of the forward foot 210 is opposite to a rotating direction of the backward foot 220, which leads one of the forward foot 210 and the backward foot 220 to be rotated to be folded when the other of the forward foot 210 and the backward foot 220 is rotated to be unfolded simultaneously.

In other embodiments, the third pivoting point D3 can also be located at an outer side of the first pivoting point D1 at the forward foot 210 relative to the body 100, and the fourth pivoting point D4 can be located at an inner side of the second pivoting point D2 at the backward foot 220 relative to the body 100, such that the rotating direction of the forward foot 210 is opposite to the rotating direction of the backward foot 220, which leads one of the forward foot 210 and the backward foot 220 to be rotated to be folded when the other of the forward foot 210 and the backward foot 220 is rotated to be unfolded.

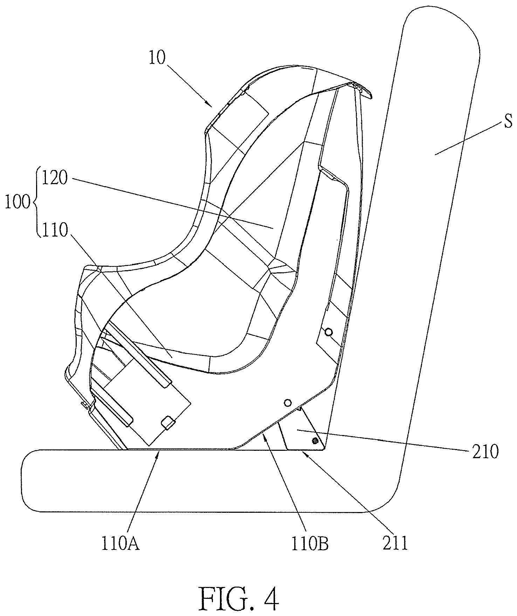

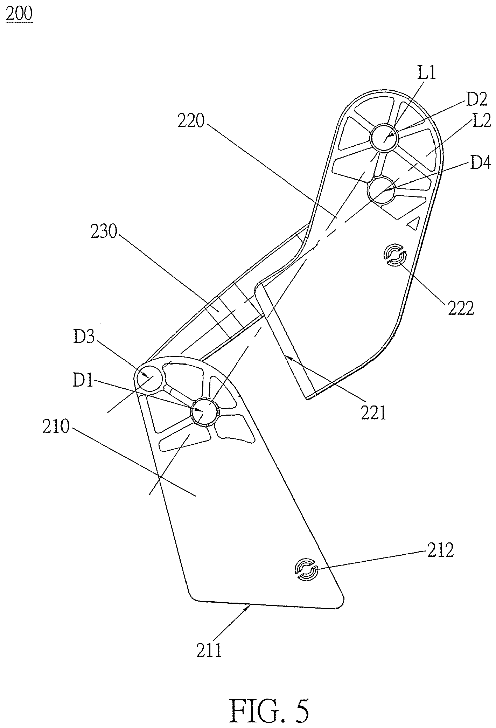

Please refer to FIG. 4 and FIG. 5. FIG. 4 is a diagram showing the child safety seat in forward use according to the embodiment of the present invention. FIG. 5 is a diagram of the supporting foot device as the child safety seat is in forward use according to the embodiment of the present invention. As shown in FIG. 3 to FIG. 5, a first supporting surface 211 is formed on an end of the forward foot 210 away from the body 100. The forward foot 210 is rotated to be unfolded relative to the body 100 when backward foot 220 is rotated to be folded relative to the body 100. When the forward foot 210 of the supporting foot device 200 is rotated to be in an operating position, the first supporting surface 211 is used for abutting a seat surface of a car seat S to position an inclined angle of the child safety seat 10, such that the child safety seat 10 and the supporting foot device 200 are maintained in an erection status as shown in FIG. 4 and FIG. 5.

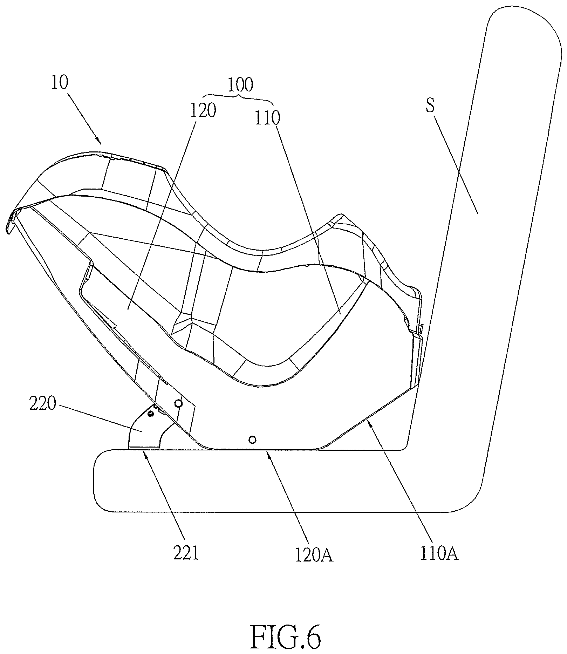

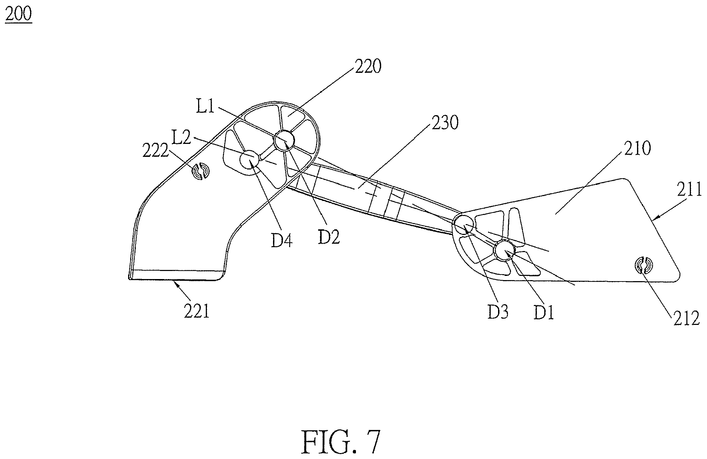

Please refer to FIG. 6 and FIG. 7. FIG. 6 is a diagram showing the child safety seat in backward use according to the embodiment of the present invention. FIG. 7 is a diagram of the supporting foot device as the child safety seat is in backward use according to the embodiment of the present invention. As shown in FIG. 3, FIG. 6 and FIG. 7, a second supporting surface 221 is formed on an end of the backward foot 220 away from the body 100. The backward foot 220 is rotated to be unfolded relative to the body 100 when forward foot 210 is rotated to be folded relative to the body 100. When the backward foot 220 of the supporting foot device 200 is rotated to be in an operating position, the second supporting surface 221 is used for abutting the seat surface of the car seat S to position the inclined angle of the child safety seat 10, such that the child safety seat 10 and the supporting foot device 200 are maintained in an backward status as shown in FIG. 6 and FIG. 7.

The supporting foot device 200 further includes a first restraining mechanism 10A and a second restraining mechanism 10B. More specifically, as shown in FIG. 2 and FIG. 3, the forward foot 210 includes a first positioning protrusion 212 located away from the first pivoting point D1 and the third pivoting point D3. A first positioning slot 121 is formed on a bottom of the backrest portion 120. The first positioning protrusion 212 and the first positioning slot 121 form the first restraining mechanism 10A. The forward foot 210 is rotated to be folded relative to the body 100 until the first positioning protrusion 212 abuts against the first positioning slot 121. Meantime, the child safety seat is in the backward status as shown in FIG. 6 and FIG. 7.

Please refer to FIG. 2 and FIG. 3. The backward foot 220 includes a second positioning protrusion 222 located away from the second pivoting point D2 and the fourth pivoting point D4. A second positioning slot 122 is formed on the bottom of the backrest portion 120. The second positioning protrusion 222 and the second positioning slot 122 form the second restraining mechanism 10B. The backward foot 220 is rotated to be folded relative to the body 100 until the second positioning protrusion 222 abuts against the second positioning slot 122. Meantime, the child safety seat is in the erection status as shown in FIG. 4 and FIG. 5.

Please refer to FIG. 4 and FIG. 5. The child safety seat 10 is in forward use. The connecting member 230 drives the forward foot 210 to rotated to be unfolded when the backward foot 220 is rotated to be folded. The supporting foot device 200 is rotated relative to the body 100 until the second positioning protrusion 222 abuts against the second positioning slot 122. Meantime, the forward foot 210 is in the operating position and the first supporting surface 211 is configured to be parallel to a seat surface of the body 100. The first supporting surface 211 abuts against the seat surface of the car seat S, such that the seat surface of the body 100 is parallel to the seat surface of car seat S, leading the child safety seat 10 to be in the erection status.

Please refer to FIG. 6 and FIG. 7. The child safety seat 10 is in backward use. The connecting member 230 drives the backward foot 220 to rotated to be unfolded when the forward foot 210 is rotated to be folded. The supporting foot device 200 is rotated relative to the body 100 until the first positioning protrusion 212 abuts against the first positioning slot 121. Meantime, the backward foot 220 is in the operating position and the second supporting surface 221 is configured to be inclined relative to the seat surface of the body 100. The second supporting surface 221 abuts against the seat surface of the car seat S, such that the seat surface of the body 100 is inclined relative to the seat surface of car seat S, leading the child safety seat 10 to be in the backward status.

Please refer to FIG. 4 to FIG. 7. The first pivoting point D1 and the second pivoting point D2 are connected by a virtual line L1. The third pivoting point D3 and the fourth pivoting point D4 are connected by a virtual line L2. No matter how the forward foot 210 and the backward foot 220 rotate, the line L1 intersects the line L2. With the four-bar structure formed by the body 100, the forward foot 210, the backward foot 220, and the connecting member 230, the forward foot 210 and the backward foot 220 are linked to rotate towards opposite directions.

Furthermore, the seat portion 100 and the backrest portion 120 include a seat supporting surface 110A and a backrest supporting surface 120A for supporting the body 100 in forward use and backward use respectively. The first supporting surface 211 of the forward foot 210 and the seat supporting surface 110A cooperatively support the body 100 when the forward foot 210 is in use. The second supporting surface 211 of the backward foot 220 and the backrest supporting surface 120A cooperatively support the body 100 when the backward foot 220 is in use.

Please refer to FIG. 1 to FIG. 7. Detailed descriptions of operating procedures and statuses of the child safety seat 10 of the present invention are described as below. If the child safety seat 10 is desired to be in backward use as shown in FIG. 6 and FIG. 7, the backward foot 220 is rotated to be unfolded and the connecting member 230 drives the forward foot 210 to be rotated to be folded, such that the supporting foot 200 is rotated relative to the body 100 until the first positioning protrusion 212 abuts against the first positioning slot 121. Meantime, the backward foot 220 is in the operating position. The second supporting surface 221 is configured to be inclined to the seat surface of the body 100 and abuts against the seat surface of the car seat S, such that the seat surface of the body 100 is maintained to be inclined relative to the seat surface of the car seat S, which leads the child safety seat 10 to be in the backward status and allows infants to lie down backward in the child safety seat 10 when putting them in the child safety seat 10.

If the child safety seat 10 is desired to be in forward use as shown in FIG. 4 and FIG. 5, the forward foot 210 is rotated to be unfolded and the connecting member 230 drives the backward foot 220 to be rotated to be folded, such that the supporting foot 200 is rotated relative to the body 100 until the second positioning protrusion 222 abuts against the second positioning slot 122. Meantime, the forward foot 210 is in the operating position. The first supporting surface 211 is configured to be parallel to the seat surface of the body 100 and abuts against the seat surface of the car seat S, such that the seat surface of the body 100 is maintained to be parallel to the seat surface of the car seat S, which leads the child safety seat 10 to be in the erection status and allow children to sit in the child safety seat 10 when putting them in the child safety seat 10.

In contrast to the prior art, the present invention provides the supporting foot device and the child safety seat therewith, with simple structure and easy operation, which is suitable for children in different growth stages. The forward foot and the backward foot is linked to rotate by the first pivoting point at the bottom of the body to pivot to the forward foot, the second pivoting point at the bottom of the body to pivot to the backward foot, and the connecting member to connect the forward foot to the backward foot. In addition, the body, the forward foot, the backward foot, and the connecting member form the four-bar linkage structure with four pivoting points including the first pivoting point, the second pivoting point, the third pivoting point, and the fourth pivoting point, such that the rotating direction of the forward foot is opposite to the rotating direction of the backward foot. When one of the forward foot and the backward foot is rotated, the other one of the forward foot and the backward foot is driven by the connecting member to be rotated relative to the body, such that it is convenient to lead the forward foot or the backward foot to abut the car seat by the supporting foot device. Furthermore, by adjusting different feet of the supporting foot device abutting the car seat, the body can be positioned at different inclined angles, such that it is convenient to adjust the inclined angle of the child safety seat according to different situations.

Those skilled in the art will readily observe that numerous modifications and alterations of the device and method may be made while retaining the teachings of the invention.

## Claims

1. A child safety seat (10) comprising a body (100) and a supporting foot device (200) disposed at a bottom of the body (100), the support foot device (200) being for abutting against a car seat, so as to adjust an inclined angle of the body, the supporting foot device (200) comprising:
a forward foot (210), the forward foot (210) being pivoted to the bottom of the body (100) at a first pivoting point (D1);
a backward foot (220), the backward foot (220) being pivoted to the bottom of the body (100) at a second pivoting point (D2); and
a connecting member (230) pivoted to the forward foot (210) and backward foot (220), the forward foot (210) being pivoted to the connecting member (230) at a third pivoting point (D3), the backward foot (220) being pivoted to the connecting member (230) at a fourth pivoting point (D4), and the forward foot (210) and the back forward foot (220) being linked to rotate by the connecting member (230),
**characterized in that** a rotating direction of the forward foot (210) is opposite to a rotating direction of the backward foot (220).

2. The child safety seat (10) of claim 1, **characterized in that** the body (100), the forward foot (210), the backward foot (220), and the connecting member (230) form a four-bar linkage structure with the first pivoting point (D1), the second pivoting point (D2), the third pivoting point (D3), and the fourth pivoting point (D4).

3. The child safety seat (10) of claim 1, **characterized in that** a line (L1) connected between the first pivoting point (D1) and the second pivoting point (D2) intersects a line connected between the third pivoting point (D3) and the fourth pivoting point (D4).

4. The child safety seat (10) of claim 1, **characterized in that** a first restraining mechanism (10A) and a second restraining mechanism (10B) are disposed at the bottom of the body (100) of the child safety seat (10), and the first restraining mechanism (10A) or the second restraining mechanism (10B) restrains rotation of the supporting foot device (200).

5. The child safety seat (10) of claim 4, **characterized in that** the first restraining mechanism (10A) comprises a first positioning protrusion (212) protruded from the forward foot (200), and a first positioning slot (121) formed on the bottom of the body (100) and disposed at a location corresponding to the first positioning protrusion (212), and the second restraining mechanism (10B) comprises a second positioning protrusion (222) protruded from the backward foot (220), and a second positioning slot (122) formed on the bottom of the body (100) and disposed at a location corresponding to the second positioning protrusion (222).

6. The child safety seat (10) of claim 4, **characterized in that** a first supporting surface (211) is formed on an end of the forward foot (210) away from the body (100), and the first supporting surface (211) is substantially parallel to a seat surface of the child safety seat (10) such that the child safety seat (10) is in an erection status when the supporting foot device (200) is rotated to a position where the second restraining mechanism (10B) restrains the supporting foot device (200) from being rotated.

7. The child safety seat (10) of claim 4, **characterized in that** a second supporting surface (221) is formed on an end of the backward foot (220) away from the body (100), and the second supporting surface (221) is inclined relative to the seat surface of the child safety seat (10) such that the child safety seat (10) is in an backward status when the supporting foot device (200) is rotated to a position where the first restraining mechanism (10A) restrains the supporting foot device (200) from being rotated.

8. The child safety seat (10) of claim 7, **characterized in that** the backward foot (220) is located at an upper side of the forward foot (210).

9. The child safety seat (10) of claim 6, **characterized in that** the backward foot (220) is located at an upper side of the forward foot (210).

10. The child safety seat of any preceding claim, **characterized in that** the body (100) comprises a seat portion (110) and a backrest portion (120), the seat portion (110) comprises a seat supporting surface (110A), the backrest portion comprises a backrest supporting surface (120A), the forward foot (210) and the seat supporting surface (110A) cooperatively support the body (100) when the forward foot (210) is in use, and the backward foot (220) and the backrest supporting surface (120A) cooperatively support the body (100) when the backward foot (220) is in use.

## Patentansprüche

1. Kindersicherheitssitz (10), der einen Körper (100) und eine Fußabstützvorrichtung (200) aufweist, die an einem Boden des Körpers (100) angeordnet ist, wobei die Fußabstützvorrichtung (200) an einem Fahrzeugsitz zum Einstellen eines Neigungswinkel des Körpers anliegt, wobei die Fußabstützvorrichtung (200) umfasst:
einen vorderen Fuß (210), wobei der vordere Fuß (210) an einem ersten Schwenkpunkt (D1) zum Boden des Körpers (100) schwenkbar ist;
einen hinteren Fuß (220), wobei der hintere Fuß (220) an einem zweiten Schwenkpunkt (D2) zum Boden des Körpers (100) schwenkbar ist; und
ein Verbindungselement (230), das zum vorderen Fuß (210) und zum hinteren Fuß (220) schwenkbar ist, wobei der vordere Fuß (210) an einem dritten Schwenkpunkt (D3) zum Verbindungselement (230) schwenkbar ist, der hintere Fuß (220) an einem vierten Schwenkpunkt (D4) zum Verbindungselement (230) schwenkbar ist, und der vordere Fuß (210) und der hintere Fuß (220) durch das Verbindungselement (230) drehbar verbunden sind,
**dadurch gekennzeichnet, dass** eine Drehrichtung des vorderen Fußes (210) einer Drehrichtung des hinteren Fußes (220) entgegengesetzt ist.

2. Kindersicherheitssitz (10) nach Anspruch 1, **dadurch gekennzeichnet, dass** der Körper (100), der vordere Fuß (210), der hintere Fuß (220) und das Verbindungselement (230) mit dem ersten Schwenkpunkt (D1), dem zweiten Schwenkpunkt (D2), dem dritten Schwenkpunkt (D3) und dem vierten Schwenkpunkt (D4) eine Viergelenkstruktur bilden.

3. Kindersicherheitssitz (10) nach Anspruch 1, **dadurch gekennzeichnet, dass** eine zwischen dem ersten Schwenkpunkt (D1) und dem zweiten Schwenkpunkt (D2) gezogene Linie eine zwischen dem dritten Schwenkpunkt (D3) und dem vierten Schwenkpunkt (D4) gezogene Linie schneidet.

4. Kindersicherheitssitz (10) nach Anspruch 1, **dadurch gekennzeichnet, dass** ein erster Rückhaltemechanismus (10A) und ein zweiter Rückhaltemechanismus (10B) am Boden des Körpers (100) des Kindersicherheitssitzes (10) angeordnet sind, und der erste Rückhaltemechanismus (10A) und der zweite Rückhaltemechanismus (10B) eine Drehung der Fußabstützvorrichtung (200) verhindert.

5. Kindersicherheitssitz (10) nach Anspruch 4, **dadurch gekennzeichnet, dass** der erste Rückhaltemechanismus (10A) einen ersten Positionierungsvorsprung (212), der vom vorderen Fuß (200) vorragt, und einen ersten Positionierungsschlitz (121) aufweist, der am Boden des Körpers (100) ausgebildet ist und an einer dem ersten Positionierungsvorsprung (212) entsprechenden Position angeordnet ist, und der zweite Rückhaltemechanismus (10B) einen zweiten Positionierungsvorsprung (222), der vom hinteren Fuß (220) vorragt, und einen zweiten Positionierungsschlitz (122) aufweist, der am Boden des Körpers (100 ausgebildet ist und an einer dem zweiten Positionierungsvorsprung (222) entsprechenden Position angeordnet ist.

6. Kindersicherheitssitz (10) nach Anspruch 4, **dadurch gekennzeichnet, dass** eine erste Abstützfläche (211) an einem vom Körper (100) abgewandten Ende des vorderen Fußes (210) ausgebildet ist, und die erste Abstützfläche (211) im Wesentlichen parallel zu einer Sitzfläche des Kindersicherheitssitzes (10) verläuft, sodass sich der Kindersicherheitssitz (10) in einem aufgerichteten Zustand befindet, wenn die Fußabstützvorrichtung (200) auf eine Position gedreht ist, an welcher der zweite Rückhaltemechanismus (10B) die Fußabstützvorrichtung (200) am Drehen hindert.

7. Kindersicherheitssitz (10) nach Anspruch 4, **dadurch gekennzeichnet, dass** eine zweite Abstützfläche (221) an einem vom Körper (100) abgewandten Ende des hinteren Fußes (220) ausgebildet ist, und die zweite Abstützfläche (221) relativ zur Sitzfläche des Kindersicherheitssitzes (10) geneigt ist, sodass sich der Kindersicherheitssitz (10) in einem nach hinten gerichteten Zustand befindet, wenn die Fußabstützvorrichtung (200) auf eine Position gedreht ist, an welcher der erste Rückhaltemechanismus (10A) die Fußabstützvorrichtung (10A) am Drehen hindert.

8. Kindersicherheitssitz (10) nach Anspruch 7, **dadurch gekennzeichnet, dass** der hintere Fuß (220) an einer Oberseite des vorderen Fußes (210) angeordnet ist.

9. Kindersicherheitssitz (10) nach Anspruch 6, **dadurch gekennzeichnet, dass** der hintere Fuß (220) an einer Oberseite des vorderen Fußes (210) angeordnet ist.

10. Kindersicherheitssitz nach einem der vorhergehenden Ansprüche, **dadurch gekennzeichnet, dass** der Körper (200) einen Sitzbereich (210) und einen Rückenlehnenbereich (120) aufweist, der Sitzbereich (110) eine Sitzabstützfläche (110A) aufweist, der Rückenlehnenbereich eine Rückenlehnenabstützfläche (120A) aufweist, der vordere Fuß (210) und die Sitzabstützfläche (110A) den Körper (100) gemeinsam abstützen, wenn der vordere Fuß (210) im Einsatz ist, und der hintere Fuß (220) und die Rückenlehnenabstützfläche (120A) den Körper (100) gemeinsam abstützen, wenn der hintere Fuß (220) im Einsatz ist.

## Revendications

1. Siège de sécurité pour enfant (10) comprenant un corps (100) et un dispositif de pied de support (200) disposé au niveau d'une partie inférieure du corps (100), le dispositif de pied de support (200) étant destiné à venir en butée contre un siège de voiture, de manière à ajuster un angle incliné du corps, le dispositif de pied de support (200) comprenant :
un pied avant (210), le pied avant (210) étant amené à pivoter par rapport à la partie inférieure du corps (100) au niveau d'un premier point de pivotement (D1) ;
un pied arrière (220), le pied arrière (220) étant amené à pivoter par rapport à la partie inférieure du corps (100) au niveau d'un deuxième point de pivotement (D2) ; et
un élément de raccordement (230) amené à pivoter par rapport au pied avant (210) et au pied arrière (220), le pied avant (210) étant amené à pivoter par rapport à l'élément de raccordement (230) au niveau d'un troisième point de pivotement (D3), le pied arrière (220) étant amené à pivoter par rapport à l'élément de raccordement (230) au niveau d'un quatrième point de pivotement (D4), et le pied avant (210) et le pied arrière (220) étant liés en rotation par l'élément de raccordement (230),
**caractérisé en ce qu'**une direction de rotation du pied avant (210) est opposée à une direction de rotation du pied arrière (220).

2. Siège de sécurité pour enfant (10) de la revendication 1, **caractérisé en ce que** le corps (100), le pied avant (210), le pied arrière (220) et l'élément de raccordement (230) forment une structure de liaison à quatre barres avec le premier point de pivotement (D1), le deuxième point de pivotement (D2), le troisième point de pivotement (D3) et le quatrième point de pivotement (D4).

3. Siège de sécurité pour enfant (10) de la revendication 1, **caractérisé en ce qu'**une ligne (L1) reliée entre le premier point de pivotement (D1) et le deuxième point de pivotement (D2) coupe une ligne reliée entre le troisième point de pivotement (D3) et le quatrième point de pivotement (D4).

4. Siège de sécurité pour enfant (10) de la revendication 1, **caractérisé en ce qu'**un premier mécanisme de limitation (10A) et un deuxième mécanisme de limitation (10B) sont disposés au niveau de la partie inférieure du corps (100) du siège de sécurité pour enfant (10), et le premier mécanisme de limitation (10A) ou le deuxième mécanisme de limitation (10B) limite la rotation du dispositif de pied de support (200).

5. Siège de sécurité pour enfant (10) de la revendication 4, **caractérisé en ce que** le premier mécanisme de limitation (10A) comprend une première saillie de positionnement (212) faisant saillie à partir du pied avant (200), et une première fente de positionnement (121) formée sur la partie inférieure du corps (100) et disposée à un emplacement correspondant à la première saillie de positionnement (212), et le deuxième mécanisme de limitation (10B) comprend une deuxième saillie de positionnement (222) faisant saillie à partir du pied arrière (220), et une deuxième fente de positionnement (122) formée sur la partie inférieure du corps (100) et disposée à un emplacement correspondant à la deuxième saillie de positionnement (222).

6. Siège de sécurité pour enfant (10) de la revendication 4, **caractérisé en ce qu'**une première surface de support (211) est formée sur une extrémité du pied avant (210) loin du corps (100), et la première surface de support (211) est essentiellement parallèle à une surface de siège du siège de sécurité pour enfant (10) de sorte que le siège de sécurité pour enfant (10) soit dans un état relevé lorsque le dispositif de pied de support (200) est tourné jusqu'à une position dans laquelle le deuxième mécanisme de limitation (200) limite la rotation du dispositif de pied de support (10B).

7. Siège de sécurité pour enfant (10) de la revendication 4, **caractérisé en ce qu'**une deuxième surface de support (221) est formée sur une extrémité du pied arrière (220) loin du corps (100), et la deuxième surface de support (221) est inclinée par rapport à la surface de siège du siège de sécurité pour enfant (10) de sorte que le siège de sécurité pour enfant (10) soit dans un état vers l'arrière lorsque le dispositif de pied de support (200) est tourné jusqu'à une position dans laquelle le premier mécanisme de limitation (10A) limite la rotation du dispositif de pied de support (200).

8. Siège de sécurité pour enfant (10) de la revendication 7, **caractérisé en ce que** le pied arrière (220) est situé au niveau d'un côté supérieur du pied avant (210).

9. Siège de sécurité pour enfant (10) de la revendication 6, **caractérisé en ce que** le pied arrière (220) est situé au niveau d'un côté supérieur du pied avant (210).

10. Siège de sécurité pour enfant de l'une des revendications précédentes, **caractérisé en ce que** le corps (100) comprend une partie siège (110) et une partie dossier (120), la partie siège (110) comprend une surface de support de siège (110A), la partie dossier comprend une surface de support de dossier (120A), le pied avant (210) et la surface de support de siège (110A) supportent en coopération le corps (100) lorsque le pied avant (210) est en cours d'utilisation, et le pied arrière (220) et la surface de support de dossier (120A) supportent en coopération le corps (100) lorsque le pied arrière (220) est en cours d'utilisation.
